# EUROPÄISCHE PATENTSCHRIFT

(11) **EP 1 659 516 B1**
(45) Veröffentlichungstag und Bekanntmachung des Hinweises auf die Patenterteilung: **02.01.2008**
(21) Anmeldenummer: 05025205.5
(22) Anmeldetag: 18.11.2005
(51) Int. Cl.: G06K 7/00, G06K 19/07

(54) **Verfahren und Vorrichtung zur Datenübertragung**
Data transfer apparatus and data transfer method
Procédé et appareil de transmission de données

(30) Priorität: 19.11.2004 DE 102004055953; 24.11.2004 DE 102004056797
(43) Veröffentlichungstag der Anmeldung: 24.05.2006
(73) Patentinhaber: ATMEL Germany GmbH, 74072 Heilbronn (DE)
(72) Erfinder: Friedrich, Ulrich, Dipl.-Ing., 74248 Ellhofen (DE)

(56) Entgegenhaltungen:
- US-A1- 2002 199 027
- US-A1- 2003 133 435
- US-B1- 6 289 209

## Beschreibung

Die vorliegende Erfindung betrifft ein Verfahren zum Übertragen von Daten zwischen einer Basisstation und wenigstens einer entfernten Einheit, wie einem Transponder oder Remote Sensor, mit einer elektromagnetischen Welle, auf die Informationspakete aus unterschiedlichen Symbolen aufmoduliert werden, wobei die Informationspakete zumindest einen Kopfabschnitt und einen Datenabschnitt aufweisen, wobei im Kopfabschnitt wenigstens eines Informationspakets die Symbole eindeutig definiert werden und wobei in einem folgenden Datenabschnitt mittels der Symbole Daten codiert und übertragen werden.

Darüber hinaus betrifft die Erfindung eine Vorrichtung zur Übertragung von Daten mittels einer elektromagnetischen Welle, auf die Informationspakete aus unterschiedlichen Symbolen aufmodulierbar sind, mit einer Basisstation und wenigstens einer entfernten Einheit, wie einem Transponder oder Remote Sensor, wobei die Informationspakete zumindest einen Kopfabschnitt und einen Datenabschnitt aufweisen, wobei im Kopfabschnitt wenigstens eines Informationspakets die Symbole eindeutig definiert sind und wobei in einem folgenden Datenabschnitt mittels der Symbole Daten codierbar und übertragbar sind.

Im Allgemeinen werden Verfahren zur Übertragung von Daten zwischen einer Basisstation und einer entfernten Einheit, beispielsweise einem Transponder oder einem Remote Sensor ― im Folgenden zusammenfassend kurz als "Tag" bezeichnet ― verwendet, um innerhalb eines sogenannten Authentifizierungsprozesses eine Identifikation durchzuführen. Grundlage der bidirektionalen Datenübertragung zwischen Tag und Basisstation bildet dabei ein Daten- oder Übertragungsprotokoll, das unter anderem die Anzahl der Informationssymbole festlegt, beispielsweise die Wertigkeiten je Datenbit, sowie die Kennung der einzelnen Symbole definiert. Ein entsprechendes Verfahren ― insbesondere betreffend eine vorteilhafte Struktur des Kopfabschnitts ― ist Gegenstand der EP 1417631 derselben Anmelderin (veröffentlicht am 12.05.2004), deren Inhalt hiermit durch Bezugnahme vollumfänglich zum Bestandteil der vorliegenden Offenbarung gemacht wird. Die unabhängigen Ansprüche sind gegenüber US-A-2003/0133435 abgegrenzt. Die Erfindung ist gegenstand der unabhängigen Ansprüche 1 und 10.

Im Rahmen internationaler Zusammenarbeiten auf dem Gebiet der Radiofrequenz-Identifikation (RFID) sind in der Vergangenheit sog. "(Minimal)-Air-Interfaces" in Form von Datenprotokoll-Schnittstellen zwischen Tag und Basisstation definiert worden, vgl. "Specification for an RFID Air Interface, EPCglobal, EPC™ Radio-Frequency Identity Protocols, Class-1 Generation-2 UHF RFID, Protocol for Communications at 860 MHz - 960 MHz, Version 1.0.7" vom 27.09.2004, kurz: EPCglobal. Bei derartigen Vereinbarungen ist es in der Folge nicht ohne weiteres möglich, ein einmal festgelegtes Protokoll in einfacher Weise um zusätzliche Kommandos oder dgl. zu erweitern. Erschwerend kommt noch hinzu, dass bei derartigen Protokollen vielfach Codesequenzen für spätere offizielle Erweiterungen reserviert sind. Beispielhaft seien hier die Konzeptüberlegungen für EPCglobal erwähnt: Basierend auf einem grundlegenden Protokollkonzept (Class-1) sollen weitere Protokollklassen (Class-2 und Class-3) mit zusätzlichen Funktionalitäten, wie Sensoranwendungen oder sicherheitsrelevante Applikationen erschlossen werden. Für Erweiterungen außerhalb dieser Norm, jedoch auf der Grundlage des genannten Protokollkonzepts, sind entweder sog. Customer Commands oder bestimmte fest vorgegebene Codesequenzen zu berücksichtigen, vgl. EPCglobal, S. 11.

In offenen RFID-Systemen mit wenigstens einer Basisstation und Tags unterschiedlicher (und veränderlicher) Art und Anzahl, in denen verschiedene Kunden ein und dieselbe Tag-Lösung geliefert bekommen, funktionieren solche Ansätze in der Regel nicht. Zwar kann in solchen Fällen das eingesetzte Übertragungsprotokoll grundsätzlich kundenspezifische Codes anbieten; jedoch ergeben sich Komplikationen, wenn eine Mehrzahl von Kunden zusätzlich noch Tags von unterschiedlichen Herstellern bezieht, denn ein bestimmtes kundenspezifisches Kommando kann jeweils nur einen Kunden adressieren Insbesondere dann, wenn mehrere Kunden eine jeweils kundenspezifische Lösung einsetzen wollen, lässt sich diese folglich nicht mehr durch einen einzigen einheitlichen Code darstellen. Daher sind für Plattform-Lösungen, bei denen ein Kommandocode kostengünstig erweitert oder ein Umschalten in einen veränderten Betriebsmodus (Multiprotokoll-Fähigkeit), wie einen Vollduplex-Betrieb, ermöglicht werden soll, neuartige Lösungsmechanismen erforderlich.

Der Erfindung liegt ausgehend von einem Air-Interface, wie es beispielsweise in der EPCglobal-Spezifikation offenbart ist, die Aufgabe zugrunde, ein Verfahren der eingangs genannten Art dahingehend weiter zu entwickeln, dass neue, das Protokoll erweiternde Befehlssequenzen (nachfolgend zusammen mit Modusumschaltungen vereinfachend als "Protokollerweiterungen" bezeichnet) sicher als solche erkannt werden und nicht in Konflikt mit dem existierenden Protokoll stehen. Eine zur Durchführung des erfindungsgemäßen Verfahrens geeignete Vorrichtung soll sich darüber hinaus durch einen hohen Wiederverwertungsanteil standardmäßig vorhandener Logikschaltungen auszeichnen, was eine zusätzliche Kostengünstigkeit der erfindungsgemäßen Lösung bedingt.

Die Aufgabe wird bei einem Verfahren der eingangs genannten Art dadurch gelöst, dass zum Verändern eines verwendeten Übertragungsprotokolls wenigstens ein Kopfabschnitt so modifiziert wird, dass bei einer entfernten Einheit, die das veränderte Protokoll nicht unterstützt, ein Fehlerzustand ausgelöst wird und sich diese Einheit daraufhin aus einer Kommunikation mit der Basisstation zurückzieht. Eine Vorrichtung der eingangs genannten Art ist zur Lösung der Aufgabe derart ausgebildet, dass die Basisstation zwecks Änderung eines verwendeten Übertragungsprotokolls zum Modifizieren wenigstens eines Kopfabschnitts eingerichtet ist, durch den bei einer das veränderte Protokoll nicht unterstützenden entfernten Einheit ein Fehlerzustand verbunden mit einem Rückzug aus einer Kommunikation mit der Basisstation auslösbar ist. Somit ist in einfacher Weise die angestrebte Erweiterung des Befehlsvorrats bei an entsprechende Protokollvereinbarungen gebundene RFID-Systeme möglich, indem der o.g. Kopfabschnitt durch die Basisstation verändert wird, was die Tags erkennen ― zumindest als Fehler für den Fall, dass die Protokolländerung nicht unterstützt wird. Insbesondere lässt sich das erfindungsgemäße Verfahren dazu verwenden, die Datenübertragung von der Basisstation zum Tag auf einen Vollduplex-Modus umzustellen, wobei das Tag das dekodierte Signal backscattert, sodass die Basisstation eventuell vorhandene Fehler schnell erkennen kann. In der bereits erwähnten EPCglobal-Spezifikation ist festgelegt, dass der Link nur im Halbduplex-Modus betrieben wird; anderenfalls sind kundenspezifische Kommandos erforderlich, die erfindungsgemäß gerade vermieden werden, wodurch sich der Logikaufwand entsprechend begrenzen lässt.

In Verbindung mit der erfindungsgemäßen Protokollumschaltung ist es darüber hinaus möglich, bestimmte (Standard-)Kommandos abweichend von ihrer Standarddefinition zu interpretieren und somit quasi doppelt zu belegen. Hierbei können jedoch alle vorhandenen Speicher- und Dekodiereinrichtungen weiter verwendet werden, da dass entsprechende Kommandowort unverändert bleibt. Auch dieser Umstand trägt dazu bei, dass ein hoher Wiederverwertungsanteil bestehender Schaltlogik erreicht wird.

In der EPCglobal-Spezifikation ist unter Bezugnahme auf die dortige Fig. 6.4 auf Seite 25 dargestellt, welche Kopfabschnitt-Strukturen zum Initialisieren (Fig. 6.4 oben) bzw. zur Befehlsübertragung (Fig. 6.4 unten) von bzw. bei bidirektionalen RF-Verbindungen zwischen Basisstation und Tag verwendet werden. Sie entsprechen denjenigen in der o.g. EP-Veröffentlichung derselben Anmelderin. Nach einem sog. Delimiter, einer "Leerstelle" vorbestimmter zeitlicher Dauer, weisen die gezeigten Kopfabschnitt-Strukturen jeweils ein logisches Daten-Null-Symbol auf, dass dazu verwendet werden kann, den Kopfabschnitt auf Plausibilität zu prüfen. Da die Implementierung einer solchen Plausibilitätsprüfung jedoch nicht zwingend vorgeschrieben ist, lässt sich einerseits im Rahmen der vorliegenden Erfindung vorteilhafter Weise dieses Symbol zum Bewirken einer Protokolländerung verwenden. Demgemäss zeichnet sich das erfindungsgemäße Verfahren in einer Weiterbildung dadurch aus, dass das erste Symbol des wenigstens einen Kopfabschnitts modifiziert wird. Vorzugsweise wird dabei das erste logische Symbol des wenigstens einen Kopfabschnitts in sein logisches Gegensymbol geändert, d.h. aus einer Daten-Null entsteht erfindungsgemäß eine Daten-Eins. Andererseits ergibt sich aufgrund der Unverbindlichkeit der Plausibilitätsprüfung auch, dass bestimmte Tags eine Veränderung des entsprechenden Symbols eventuell nicht bemerken, da bei ihnen keine Überprüfung stattfindet. Eine Weiterbildung des erfindungsgemäßen Verfahrens, die speziell diese Möglichkeit sicher vermeidet, ist weiter unten detailliert beschrieben.

Alternativ wäre es auch möglich, nach dem Kopfabschnitt ein zusätzliches Symbol anzufügen, dessen zeitliche Dauer wesentlich länger ist als jedes zuvor im Kopfabschnitt verwendete Symbol, so dass eine regelmäßig im Tag vorhandene Protokoll-Detektionseinrichtung dies als einen Fehler interpretiert, wenn das Tag eine entsprechende Protokollerweiterung nicht unterstützt. Eine solche Lösung besitzt jedoch den prinzipiellen Nachteil, dass bei schnellen Arbitrierungsroutinen wertvolle Zeit durch das Übertragen des zusätzlichen Symbols verloren geht.

Eine bevorzugte Weiterbildung des erfindungsgemäßen Verfahrens sieht vor, dass das erste Symbol des wenigstens einen Kopfabschnitts zwischengespeichert und mit einem nachfolgenden Kalibrierungssymbol verknüpft, beispielsweise hinsichtlich der zeitlichen Länge verglichen wird, um die Modifizierung des ersten Symbols nachzuweisen. Entsprechend kann eine erfindungsgemäße Vorrichtung in besonders vorteilhafter Ausführungsform eine Zwischenspeichereinrichtung für ein gegenüber einem ersten Protokoll modifiziertes Symbol des wenigstens einen Kopfabschnitts, eine Verknüpfungseinrichtung für das zwischengespeicherte Symbol und ein Kalibrierungssymbol sowie eine Bestimmungseinrichtung aufweisen, die zum Nachweisen der Modifizierung des zwischengespeicherten Symbols ausgebildet ist.

Nach der EPCglobal-Spezifikation wird im Anschluss an das Daten-Null-Symbol ein Kalibrierungssymbol RTcal übertragen, dessen Länge sich aus den zeitlichen Dauern einer Daten-Null und einer Daten-Eins additiv zusammensetzt, wobei der halbe Wert von RTcal in der Folge als Grenzwert für die Unterscheidung zwischen Daten-Nullen und Daten-Einsen verwendet wird. Bevorzugter Weise wird also erfindungsgemäß das erste Symbol des Kopfabschnitts so verändert, dass sich in Verbindung mit der anschließenden RTcal-Definition für das modifizierte erste Symbol eine logische Daten-Eins ergibt, die dann vom Tag als solche erkennbar ist. Hierzu werden die beiden genannten Symbole nach dem Vorstehenden zeitlich ausgemessen und verglichen (verknüpft), wobei die zeitliche Länge des ersten Symbol ― wie gesagt ― zumindest zwischengespeichert wurde.

Ein Tag, das die entsprechenden (aufgrund der sich in der Kopfabschnitt-Änderung manifestierenden Anfrage durch die Basisstation im Hinblick auf die folgenden Befehlsdaten auch nötigen) Protokollerweiterungen unterstützt, weiß zu diesem Zeitpunkt prinzipiell, dass ein Kommando aus dem erweiterten Befehlsvorrat oder eine Modusumschaltung auszuführen bzw. vorzunehmen ist. Allerdings ist es hierzu zwingend erforderlich, dass das Tag die Länge des ersten Symbols auch tatsächlich wie beschrieben überprüft, wie bereits weiter oben angesprochen. Ist dies nicht der Fall, so kann das entsprechende Tag die Veränderung im Protokoll nicht identifizieren. Aus diesem Grund ist nach einer äußerst bevorzugten Weiterbildung des erfindungsgemäßen Verfahrens vorgesehen, dass bei Modifizierung des wenigstens einen Kopfabschnitts bei einer das veränderte Protokoll unterstützenden entfernten Einheit ein Pseudodatenstrom aus wenigstens einem Signalimpuls erzeugt wird, der sich in der Folge zwecks eindeutiger Unterscheidbarkeit erweiterungsfähiger Tags von nicht erweiterungsfähigen Tags verwenden lässt. Dementsprechend ist die erfindungsgemäße Vorrichtung vorzugsweise derart ausgestaltet, dass eine das veränderte Protokoll unterstützende entfernte Einheit bei Modifizierung des wenigstens einen Kopfabschnitts zum Erzeugen eines Pseudodatenstroms aus wenigstens einem Signalimpuls ausgebildet ist.

Der Pseudodatenstrom ist im Rahmen einer besonders vorteilhaften Ausführungsform des erfindungsgemäßen Verfahrens während der Übertragung des Kopfabschnitts durch die Basisstation wirksam. Vorliegend bedeutet "wirksam", dass der Pseudodatenstrom einer geeigneten Einrichtung der erfindungsgemäßen Vorrichtung zugeführt wird und dass dabei eine gegenüber der Verwendung eines standardmäßigen Übertragungsprotokolls definierte Veränderung der maßgeblichen Signalverläufe auftritt. Beispielsweise kann der Pseudodatenstrom einer Prüfeinrichtung, wie einem CRC-Register, zugeführt und dort (mit-)verarbeitet werden, sodass er das Ergebnis der CRC-Bestimmung wirksam (mit-)beeinflusst.

Vorteilhafter Weise wird der Pseudodatenstrom, z.B. ein aus regelmäßig während des Kopfabschnitts übertragenen Notch-Signalen abgeleitetes Signal, während des wenigstens einen Kopfabschnitts und/oder direkt nach Empfang eines letzten Kopfabschnitts-Symbols erzeugt und bereit gestellt. Zu seiner Verarbeitung in Sinne der Erfindung kann die Vorrichtung weiterhin eine Schaltungseinrichtung aufweisen, die zum Überprüfen eines nachfolgenden Datenabschnitts auf dessen Gültigkeit nach Maßgabe des Pseudodatenstroms ausgebildet ist, d.h. dass nach Maßgabe des Pseudodatenstroms ein nachfolgender Datenabschnitt auf dessen Gültigkeit überprüft wird. Die Schaltungseinrichtung liefert zu diesem Zweck ein Ergebnis, das eben dazu verwendet wird, die Gültigkeit des im Datenabschnitt übertragenen Kommandos zu überprüfen. Bei der Schaltungseinrichtung kann es sich beispielsweise um einen Bitzähler handeln, der durch den Pseudodatenstrom gestartet wird und einfach die Anzahl der übertragenen Bits zählt, wobei jede Kommandosequenz aus einer bestimmten vorbekannten (und gespeicherten) Anzahl von zu übertragenden Bits und ggf. Prüfbits, wie Parity-Bits oder CRC-Bits, gebildet ist. Eine entsprechende Weiterentwicklung des erfindungsgemäßen Verfahrens sieht vor, dass eine Anzahl in dem Datenabschnitt zu übertragender Datenbits überprüft wird. Ein Kommando wird demgemäss dann als gültig betrachtet, wenn der Code korrekt ist und entsprechend die Bitanzahl mit der vorgegebenen Definition des Kommandos korrespondiert. Falls vorhanden, muss auch die Prüfsumme oder dgl. korrekt sein.

Die vorstehend beschriebene Verwendung eines Bitzählers kann sich mit Blick auf die Kosten als nachteilig erweisen, da der Bitzähler auch für "unkritische" Protokoll-Zwischenschritte, wie das Abspeichern eines empfangenen Kommandos, eingesetzt wird, wodurch sich der Dekodieraufwand, der zum Erfassen der zusätzlichen Pulse des Pseudodatenstroms erforderlich ist, vergrößert, was eine negative Kostenfolge bedingt.

Eine alternative Möglichkeit besteht darin, den vom Tag erzeugten Pseudodatenstrom einer Schaltungseinrichtung zuzuführen, die für die Sicherungsebene des Protokolls zuständig ist, beispielsweise einer CRC- oder Parity-Einheit, sodass erfindungsgemäß eine dem Datenabschnitt zugeordnete Kenngröße, wie ein CRC- oder Parity-Datum, überprüft wird. Dementsprechend kann bei einer erfindungsgemäße Vorrichtung in einer bevorzugten Ausgestaltung vorgesehen sein, dass die Schaltungseinrichtung zum Überprüfen einer dem Datenabschnitt zugeordneten Kenngröße ausgebildet ist. In diesem Zusammenhang wird durch eine Weiterbildung des Verfahrens erreicht, dass gerade die Überprüfung der Kenngröße den Fehlerzustand bei das veränderte Protokoll nicht unterstützenden Einheiten auslöst.

Bei einer das veränderte Protokoll unterstützenden entfernten Einheit kann in Weiterentwicklung der Erfindung ein zur Überprüfung der Kenngröße erforderliches Initialdatum, der sog. Preload-Wert, bei Modifizierung des wenigstens einen Kopfabschnitts abweichend von einem Standardwert eingestellt werden. Dies geschieht insbesondere dadurch, dass das zur Überprüfung der Kenngröße erforderliche Initialdatum von der Basisstation zu den entfernten Einheiten übertragen wird, wobei die Übertragung des Initialdatums vorzugsweise mit dem wenigstens einen Kopfabschnitt erfolgt. Dabei kann das Initialdatum vorteilhafter Weise implizit übertragen werden, indem der von den entsprechenden Tags in Reaktion auf die Aufforderung durch die Basisstation generierte Pseudodatenstrom zum Einstellen des Initialwerts verwendet wird. "Implizites Einstellen" bedeutet in diesem Fall, dass die Basisstation nicht einfach einen Wert für das CRC-Register einstellt (vorgibt), sondern das hierzu während des Kopfabschnitts im Tag erzeugte (Pseudo)Daten verwendet werden. Alternativ ist jedoch auch ein direktes Einstellen des Preload-Werts ohne Rückgriff auf einen Pseudodatenstrom möglich.

In entsprechender Weiterentwicklung des erfindungsgemäßen Verfahrens kann weiterhin vorgesehen sein, dass die Kenngröße durch die Basisstation unter Berücksichtigung des in der das veränderte Protokoll unterstützenden Einheit generierten Pseudodatenstroms erzeugt wird.

Das Tag kann so am Ende der Forward-Übertragung das von der Schaltungseinrichtung gelieferte Ergebnis mit einem (vorbekannten) Erwartungswert vergleichen. Im Falle einer speziell als CRC-Einheit ausgebildeten Schaltungseinrichtung müssen die Basisstation und das Tag hierbei nach dem Vorstehenden berücksichtigen, dass zum Ermitteln des CRC-Werts der Startwert der Berechnung (Initialdatum) aufgrund des eingefügten Pseudodatenstroms gegenüber einem Standard-Kopfabschnitt ohne Protokollerweiterung geändert werden muss. Der Startwert drückt sich ― wie bereits oben erwähnt ― als sog. Preload-Wert aus und wird vorzugsweise implizit im Kopfabschnitt für das Tag eingestellt: Nach einem ersten in Abhängigkeit von Symbolen des Kopfabschnitts durch das Tag erzeugten Clockimpuls erfolgt ein Reset der CRC-Einheit; die folgenden Impulse werden auf das CRC-Register gegeben und entsprechend zum Einstellen des Preload-Werts verwendet. Alternativ möglich ist es im diesem Zusammenhang auch, das erste Reset der CRC-Einheit bereits mit einem den Kopfabschnitt einleitenden Begrenzungssymbol (Delimiter) durchzuführen. Dieses Vorgehen hat den Vorteil, dass ein längerer Pseudodatenstrom verwendet werden kann.

Grundsätzlich ist im Zuge der vorliegenden Erfindung zwecks Protokollerweiterung also beispielsweise folgendes Vorgehen möglich: Zunächst wird das erste Symbol des wenigstens einen Kopfabschnitts durch die Basisstation modifiziert. Vorzugsweise wird dazu das erste logische Symbol des wenigstens einen Kopfabschnitts in sein logisches Gegensymbol geändert (Daten-Eins statt Daten-Null). Anschließend ist es möglich, einfach einen bestimmten, vom Standard (z.B FFFFh für ein 16-Bit-CRC-Register) abweichenden Preload-Wert (z.B. EEEEh) direkt einzustellen, was jedoch u.U. hardwaretechnisch ungünstiger als die nachfolgend genannte Alternative ist. Im Hinblick auf den zu treibenden Hardware-Aufwand kann es nämlich einfacher sein, den neuen Preload-Wert wie beschrieben unter Ausnutzung des ggf. vom Tag generierten Pseudodatenstroms (implizit) einzustellen.

Nach dem Kopfabschnitt ist somit in jedem Fall der Befehlssatz eindeutig definiert. Falls keine Protokollerweiterung vorliegt, erfolgt ein erneutes Reset der CRC-Einheit. Eine Abweichung der von der Basisstation und dem Tag ermittelten CRC-Werte bewirkt eine Fehlermeldung durch das Tag, das den CRC-Fehler (oder entsprechend einen Parity-Fehler) erkannt hat und sich daraufhin von der Kommunikation zurückzieht.

Wenn die für einen bestimmten (erweiterten) Befehl erwartete (Pseudo-) Datumsfolge vorab definiert ist, lässt sich über die konkrete mathematische Ausgestaltung der verwendeten Einheit eine optimierte Hamming-Distanz erreichen, die angibt, wie sicher das in der CRC-Einheit verwendete Polynom hinsichtlich der Sicherheit einer Bitfehlererkennung ist. Der Pseudodatenstrom kann z.B. im Datenblatt des Tags bzw. des entsprechenden ICs veröffentlicht sein. Bei drei Kopfabschnitt-Symbolen mit jeweils einem CRC-Clockimpuls ergeben sich somit 2^3 mögliche Ausgestaltungen für den Pseudodatenstrom.

Erfindungsgemäß ist es somit möglich, eine vorbekannte Minimaldefinition für ein RFID-Air-Interface so zu erweitern, dass vollständig neue Befehlssequenzen, z.B. ein deterministisches Arbitrierungskommando oder ein "Send Sub-Carrier"-Befehl, oder neue Betriebsmodi, wie ein Vollduplex-Modus im Forward- und Return-Link, freischaltbar sind. Als erstes Indiz für derartige Erweiterungen wird zunächst der Kopfabschnitt unter Berücksichtigung eines günstigen Timings (nur geringfügige zeitliche Verlängerung) verändert. Anschließend wird vorteilhafter Weise durch wenigstens einen zusätzlichen Signalimpuls die unbedingte Unterscheidbarkeit sichergestellt, insbesondere durch Verarbeitung des Impulses auf der Sicherungsebene der Kommunikation (CRC-Einheit oder Bitzähler), wie vorstehend detailliert beschrieben.

Weitere Vorteile und Eigenschaften der Erfindung ergeben sich aus den Unteransprüchen sowie der nachfolgenden Beschreibung eines Ausführungsbeispiels anhand der Zeichnung. Es zeigt:
- Fig. 1: eine erfindungsgemäße Vorrichtung mit einer Basisstation und einem passiven Transponder;
- Fig. 2: in schematischer Darstellung mögliche erfindungsgemäße Signalverläufe für den Fall eines Default-Datenstroms ohne Protokollerweiterung;
- Fig. 3: analog zur Darstellung der Fig. 2 den Fall einer Protokollerweiterung unter Verwendung eines vom Transponder erzeugten Pseudodatenstroms; und
- Fig. 4: ein Ablaufdiagramm des erfindungsgemäßen Übertragungsverfahrens.

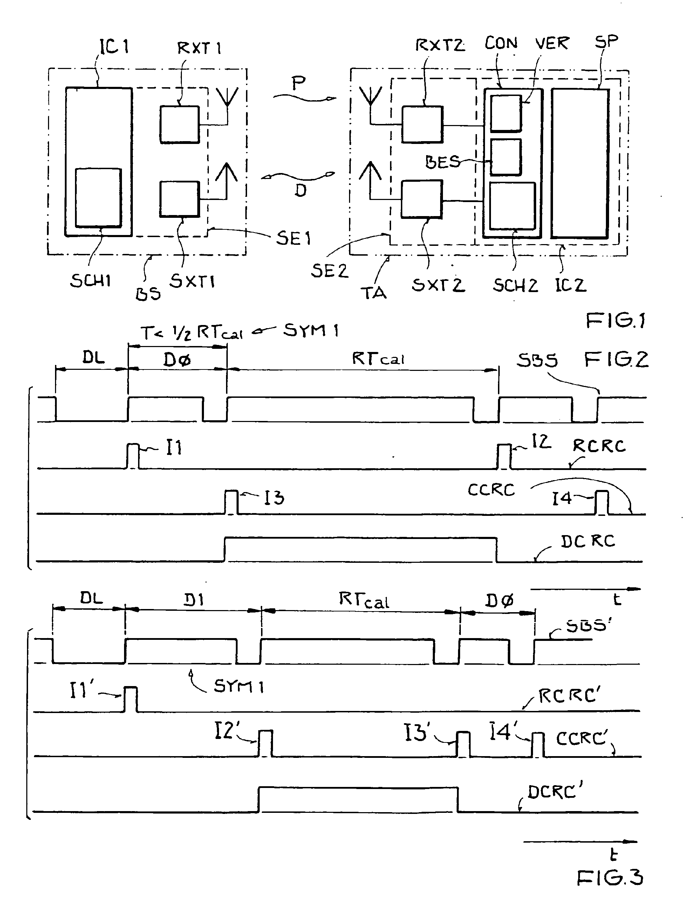

In Figur 1 ist eine erfindungsgemäße Vorrichtung in Form einer Anordnung zur Datenübertragung von einer Basisstation BS und einem passiven Transponder (Tag) TA abgebildet. Hierbei entnimmt der Transponder TA seine Energie P aus einer Trägerwelle (nicht gezeigt) der Basisstation BS. Derartige Systeme werden unter anderem im Bereich des Kraftfahrzeug (KFZ) eingesetzt, wobei der Transponder im Türschlüssel und die Basisstation BS im Auto eingebaut ist. Die Basisstation BS weist einen integrierten Schaltkreis IC1 auf, der eine Sende- und Empfangseinheit SE1 mit einem Sendeteil SXT1 und einem Empfangsteil RXT1 steuert. Zur Übertragung von Daten D sendet zunächst die Basisstation BS eine modulierte Trägerwelle (nicht gezeigt) aus, die von dem Transponder TA mittels einer Sende- und Empfangseinheit SE2, die einen Empfangsteil RXT2 und einen Sendeteil SXT2 aufweist, empfangen und zur Auswertung an eine Steuereinheit CON weitergeleitet wird, wobei das Sende- und Empfangsteil SE2 außerdem die zur Versorgung des Transponders TA notwendige Energie P absorbiert. Die Datenübertragung D erfolgt bidirektional auch zurück vom Transponder TA zur Basisstation BS (Backscatter), beispielsweise in einem Halb- oder Vollduplex-Verfahren.

Die genannten Empfangs- und Sendeteile weisen jeweils eine geeignete Antenneneinrichtung, wie eine Dipolantenne oder dgl. auf. Ferner umfasst zumindest die integrierte Schaltung IC2 eine Steuereinheit CON und einer Speichereinheit SP, in der unter anderem die festgelegten Kenngrößen eines zur Datenübertragung von Informationspaketen verwendeten Protokolls und erfindungsgemäß ggf. bestimmte Protokollerweiterungen, wie Befehle zur Modusumschaltung, abgelegt sind. Eine entsprechende Speichereinheit (nicht gezeigt) ist vorteilhafter Weise auch in der integrierten Schaltung IC1 der Basisstation BS enthalten. Darüber hinaus kann die Speichereinheit SP auch zum Zwischenspeichern durch das Tag TA empfangener Daten bzw. einzelner empfangener Datenbits dienen. Beide integrierten Schaltungen IC1, IC2 besitzen zudem eine Schaltungseinrichtung SCH1, SCH2, die zum Erzeugen und Überprüfen einer den übertragenen Daten D zugeordneten Kenngröße, z.B. einer CRC-Prüfsumme, ausgebildet sind. Folglich kann es sich bei der Schaltungseinrichtung insbesondere um ein CRC-Register handeln, d.h. eine Art Rechenautomat mit einer bestimmten Polynom-Rechenvorschrift, der mit einem geeigneten Datenstrom beaufschlagbar ist, was dem Fachmann geläufig ist.

Die integrierte Schaltung IC2 bzw. die Steuereinheit CON weist erfindungsgemäß weiterhin eine Verknüpfungseinrichtung VER für zumindest ein in der Speichereinheit SP zwischengespeichertes Daten-Symbol (SYM1; s. hierzu detailliert weiter unten) und ein von der Basisstation BS empfangenes Kalibrierungssymbol (RTcal; s. hierzu detailliert weiter unten) sowie eine Bestimmungseinrichtung BES auf, die zum Nachweisen einer bestimmten Eigenschaft des zwischengespeicherten Symbols SYM1, wie einer gegenüber einem standardmäßigen Übertragungsprotokoll erfolgten Modifizierung, ausgebildet ist. Bei dem gezeigten Ausführungsbeispiel ist die Verknüpfungseinrichtung VER zum Vergleichen der beiden vorstehend genannten Symbole hinsichtlich ihrer zeitlichen Länge ausgebildet, sodass die Bestimmungseinrichtung BES, ggf. unter Zusammenwirken mit der Speichereinheit SP, in der entsprechende Vorgabewerte abgelegt sind, in der Lage ist zu erkennen, ob die Länge des Symbols SYM1 gegenüber einer Standardlänge verändert, z.B. verlängert worden ist.

Gemäß der Darstellung in Fig. 1 hat die Sende- und Empfangseinheit SE2 des Tags TA einen Sende- und einen Empfangspfad. In Verbindung mit passiven Transpondern sind diese in der Regel so aufgebaut, dass beide Pfade ― abweichend vom gezeigten Ausführungsbeispiel ― mit einer gemeinsamen Antenne betrieben werden, was dem Fachmann ebenfalls bekannt ist.

Die Fig. 2 zeigt schematisch mögliche zeitliche Signalverläufe im Falle eines von der Basisstation BS (Fig. 1) gesendeten Default-Datenstroms, bei dem es zu keiner Protokollerweiterung kommt. Die Zeit t läuft in den Fig. 2 und 3 jeweils von links nach rechts in Richtung des Pfeils. Zunächst ist in Fig. 2 (oben) ein Signalstrom SBS von der Basisstation BS zum Tag TA (Fig. 1) bei einer ersten Datenrate dargestellt. Dabei handelt es sich um den Anfang eines Kopfabschnitts aus beispielsweise zwei oder drei Symbolen, mit dem die Basisstation und das Tag jeweils eine Kommunikation mit dem jeweils anderen Vorrichtungsbestandteil einleiten (vgl. die entsprechende Offenbarung in der EP 1417631 derselben Anmelderin). Vor dem eigentlichen Kopfabschnitt liegt ein Begrenzungssymbol, ein sog. Delimiter DL in Form einer Feldlücke mit definierter Dauer, vgl. EPCglobal-Spezifikation. Daran schließt sich als erstes Symbol SYM1 des Kopfabschnitts im Falle der Fig. 2 eine logische Daten-Null D0 an. Diese ist definiert als Symbol mit einer zeitlichen Dauer T < ½ x RTcal, wobei RTcal ein auf das erste Symbol SYM1 folgendes Kalibrierungssymbol ist, das bzw. dessen zeitliche Dauer definiert, wie die Basisstation die Werte 0, 1 und ggf. ein Übertragungsende EOF (*end of frame*) codiert.

Unterhalb des Signalstroms SBS ist in Fig. 2 ein Signalverlauf RCRC für ein Reset des CRC-Registers SCH2 des Tags TA (Fig. 1) gezeigt. Da die Basisstation am Anfang des Kopfabschnitts standardmäßig eine Daten-Null sendet, wird das CRC-Register mittels der gezeigten Impulse l1, l2 zwei Mal in einen Anfangszustand zurück gesetzt, beispielsweise nach dem RTcal-Symbol. Wie darunter dargestellt ist, wird dabei am Ende jedes Symbols des Kopfabschnitts ein Impuls I3, I4 eines Clocksignals CCRC erzeugt und auf das CRC-Register SCH2 gegeben, wobei die aktive Flanke die *negative ed*ge des jeweiligen Impulses l3, l4 ist. Das CRC-Register SCH2 erhält demgemäss im Falle eines Default-Datenstroms zwar zwei Impulse l3, l4, von denen der zweite I4 bereits nicht mehr im Kopfabschnitt, sondern schon im zeitlich darauf folgenden Datenabschnitt der Übertragung liegt. Allerdings wirkt sich nur dieser zweite Clockimpuls I4 aus, da zuvor durch den Impuls I2 ein Reset erfolgt ist: Der Impuls I2 bringt das CRC-Register SCH2 in den Grundzustand; mit dem Impuls I4 folgt dann der nächste Rechenschritt.

Unterhalb des CCRC-Signals ist ein möglicher Pseudodatenstrom DCRC für die CRC-Berechnung angegeben. Bei diesem Datenstrom handelt es sich um eine zuvor vereinbarte Datenfolge, die vorzugsweise immer auf die gleiche Weise erzeugt wird. Er wirkt sich letztendlich aber nur aus, wenn kein Impuls I2 vorhanden ist (s.u.; vgl. Fig. 3). Der Datenstrom DCRC kann grundsätzlich auch von der Basisstation stammen. In diesem Fall muss jedoch definiert sein, welche Daten sich bei Steuersymbolen ergeben.

Alternativ möglich ist in diesem Zusammenhang auch eine Realisierung, bei der das CRC-Register zunächst mit dem Delimiter DL zurück in den Anfangszustand gesetzt wird. Anschließend wird es während des gesamten Kopfabschnitts mit einem Pseudodatenstrom beaufschlagt. Erst wenn das Tag erkannt hat, dass die Protokollerweiterung nicht aktiviert werden soll, wird das CRC-Register durch einen entsprechenden Impuls (vgl. l2, l3 in Fig. 2) wieder zurück gesetzt.

Die Fig. 3 zeigt demgegenüber die entsprechenden Signalverläufe SBS', RCRC', CCRC', DCRC' für den Fall, dass ein Protokollerweiterungen unterstützendes Tag TA (Fig. 1) von der Basisstation BS aufgefordert wird, auf den erweiterten Befehlsvorrat zuzugreifen oder in einen anderen Betriebsmodus zu wechseln. Die Darstellung der Fig. 3 basiert allein aus zeichnerischen Gründen auf einer zweiten Datenrate, die von der Datenrate der Fig. 2 abweicht. Dies hat auf den Erfindungsgegenstand keinerlei beschränkende Wirkung.

Zum Zweck der Protokollerweiterung sendet die Basisstation BS nach dem Delimiter DL als erstes Symbol SYM1 des Signalstroms SBS' eine Daten-Eins D1, gefolgt von dem Kalibrierungssymbol RTcal, wie oben beschrieben. Aufgrund der Daten-Eins im Signalstrom SBS' erfolgt in diesem Fall nach dem RTcal-Symbol kein Reset des CRC-Registers SCH2, sondern nur durch einen Impuls I1' des Signals RCRC' im Anschluss an den Delimiter DL. Im Folgenden gehen alle Clockimpulse I2'-I4' des Signals CCRC' auf das CRCRegister SCH2, sodass sich für dieses ein gegenüber der Darstellung in Fig. 2 veränderter Preload-Wert ergibt, der bei der anschließenden Berechnung der CRC-Prüfsumme unter Einbeziehung des vom Tag generierten Pseudodatenstrom DCRC' mit zu berücksichtigen ist. Der Pseudodatenstrom DCRC' für die CRC-Berechnung ist wiederum eine zuvor vereinbarte Datenfolge, die vorzugsweise immer auf die gleiche Weise erzeugt wird und die sich vorliegend auswirkt, weil kein Reset-Impuls I2 vorhanden ist (s.o.; vgl. Fig. 2).

Als alternative Ausführungsform kann statt der Daten-Eins D1 (Fig. 3) als erstes Symbol SYM1 auch das weiter oben eingeführte EOF-Symbol anstelle der Daten-Null D0 (Fig. 2) verwendet werden, um die Protokollerweiterung anzuzeigen.

Der Preload-Wert wird dem Tag TA folglich durch die Basisstation BS im Kopfabschnitt implizit mitgeteilt und von diesem erkannt, wenn das Tag die Protokollerweiterung unterstützt und das erste Symbol SYM1 des Kopfabschnitts auswertet. Der Basisstation ist in jedem Fall die korrekte CRC-Prüfsumme unter Berücksichtigung des Preload-Werts bekannt bzw. durch die Schaltungseinrichtung SCH1 (Fig. 1) bestimmbar und wird an das Tag übermittelt. Dieses wird nun erfindungsgemäß nur dann keinen CRC-Fehler feststellen, wenn es den Preload-Wert richtig aus dem Kopfabschnitt entnommen hat, d.h. wenn es die Protokollerweiterung auch tatsächlich unterstützt. Dieser Umstand wird im Rahmen der vorliegenden Erfindung dazu verwendet, solche Tags, die im Falle der Fig. 3 einen CRC-Fehler erkennen, von der Kommunikation mit der Basisstation auszunehmen.

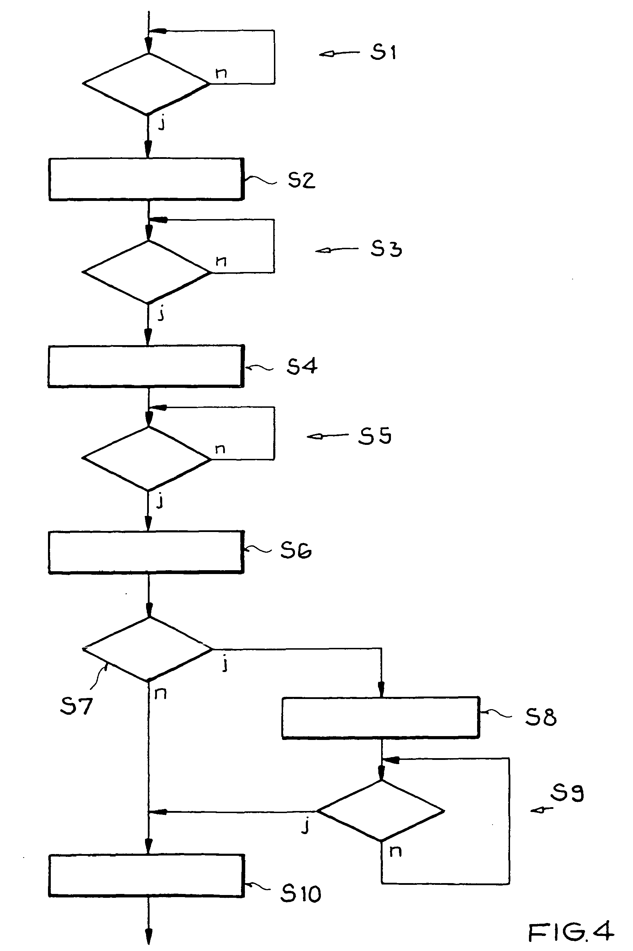

Abschließend zeigt die Fig. 4 anhand eines Flussdiagramm nochmals einen möglichen Ablauf des erfindungsgemäßen Verfahrens. Zunächst wartet das Tag TA (Fig. 1) in einem ersten Schritt S1 auf den Delimiter DL (Fig. 2, 3).

Wird die entsprechende schleifenartige Abfrage in Schritt S1 bejaht (j) und ist dieser empfangen worden, erfolgt in Schritt S2 ein Reset des CRC-Registers SCH2. Anderenfalls (n) wird Schritt S1 erneut ausgeführt.

An Schritt S2 anschließend wartet das Tag in Schritt S3 auf die nächste steigende Flanke im Signalstrom SBS, SBS' (Fig. 2, 3), die das Ende des ersten Symbols SYM1, hier: der Daten-Null D0 (Fig. 2) oder der Daten-Eins D1 (Fig. 3) markiert. Wird die entsprechende schleifenartige Abfrage in Schritt S3 bejaht (j), wird im nachfolgenden Schritt S4 die zeitliche Länge T des ersten Symbols SYM1 (vgl. Fig. 2, 3) in der Speichereinheit SP (Fig. 1) zwischengespeichert und der logische Zustand des DCRC(')-Datenstroms (Fig. 2, 3) verändert, DCRC(') = 1. Zugleich wird ein Clockimpuls l1, l1' auf das CRC-Register SCH2 gegeben. Der entsprechende neue Wert des Registers hängt dabei explizit von der verwendeten Rechenvorschrift (Polynom) ab. Daraufhin wartet das Tag in Schritt S5 wiederum auf eine steigende Signalflanke, deren Eintreffen (j) das Ende des RTcal-Symbols definiert (Fig. 2, 3). Anschließend wird in Schritt S6 der Wert für RTcal in der Speichereinheit SP gespeichert, der logische Zustand des DCRC(')-Datenstroms (Fig. 2, 3) verändert, DCRC(') = 0, und ein weiterer Clockimpuls auf das CRC-Register SCH2 gegeben.

Weiterhin wird in Schritt S6 der Wert des ersten Symbols SYM1 überprüft. Dazu wird erfindungsgemäß das zwischengespeicherte Symbol SYM1 mit dem nachfolgenden Kalibrierungssymbol RTcal arithmetisch-vergleichend ― wie bereits weiter oben detailliert beschrieben wurde ― in der Verknüpfungseinrichtung VER (Fig. 1) verknüpft, um die (zeitliche) Modifizierung des ersten Symbols mittels der Bestimmungseinrichtung BES (Fig. 1) nachzuweisen. Daran schließt sich in Schritt S7 eine Abfrage dahingehend an, ob es sich bei dem ersten Symbol um eine Daten-Null D0 handelt. Wird diese Abfrage bejaht (j), so wird das CRC-Register SCH2 in Schritt S8 bis zum Eintreffen das ersten Datensymbols zurückgesetzt, vgl. Impuls I2 in Fig. 2. Danach wartet das Tag in Schritt S9 auf das Ende des Kopfabschnitts, das z.B. wie in der EP 1417631 definiert ist. In diesem Fall (j) springt das Verfahren nach Schritt S10, der sich für SYM1=D1 (erstes Symbol ist eine Daten-Eins, Fig. 3) direkt an den Schritt S7 anschließt, und gibt weitere Clockimpulse (l4 in Fig. 2; l3', l4' in Fig. 3) auf das CRC-Register SCH2, bis das Ende der Übertragung erreicht ist. Wenn die ersten wirklichen Daten übertragen werden, hat das CRC-Register demnach für die beiden oben dargestellten Fälle unterschiedliche Werte.

Anschließend wird erfindungsgemäß weiter verfahren, wie bereits oben im Detail beschrieben.

### Bezugszeichenliste

- BES: Bestimmungseinrichtung
- BS: Basisstation
- CCRC, CCRC': Clocksignal
- CON: elektrisch isolierende Schicht, Feldoxid-Schicht
- D: Datenübertragung
- DL: Begrenzungssymbol, Delimiter
- DCRC, DCRC': Datenstrom
- D0: Daten-Null
- D1: Daten-Eins
- lC1: integrierte Schaltung
- lC2: integrierte Schaltung
- l1 - l4': Impuls
- P: Versorgungsenergie
- RCRC, RCRC': Resetsignal
- RTcal: Kalibrierungssymbol
- RXT1: Empfangsteil
- RXT2: Empfangsteil
- SBS, SBS': Signalstrom
- SCH1: Schaltungseinrichtung
- SCH2: Schaltungseinrichtung
- SE1: Sende- und Empfangseinheit
- SE2: Sende- und Empfangseinheit
- SP: Speichereinheit
- SXT1: Sendeteil
- SXT2: Sendeteil
- SYM1: erstes Kopfabschnitt-Symbol
- S1 - S10: Verfahrensschritt
- t: Zeit
- TA: Tag
- VER: Verknüpfungseinrichtung

## Patentansprüche

1. Verfahren zum Übertragen von Daten zwischen einer Basisstation (BS) und wenigstens einer entfernten Einheit, wie einem Transponder (TA) oder Remote-Sensor, mit einer elektromagnetischen Welle, auf die Informationspakete aus unterschiedlichen Symbolen aufmoduliert werden, wobei
- die Informationspakete zumindest einen Kopfabschnitt und einen Datenabschnitt aufweisen, und im Kopfabschnitt wenigstens eines Informationspakets die Symbole eindeutig definiert werden und in einem folgenden Datenabschnitt mittels der Symbole Daten codiert und übertragen werden, und
- zum Verändern eines verwendeten Übertragungsprotokolls wenigstens ein Kopfabschnitt so modifiziert wird, dass bei einer entfernten Einheit (TA), die das veränderte Protokoll nicht unterstützt, ein Fehlerzustand ausgelöst wird und sich diese Einheit daraufhin aus einer Kommunikation mit der Basisstation (BS) zurückzieht,
**dadurch gekennzeichnet, dass**
- bei Modifizierung des wenigstens einen Kopfabschnitts bei einer das veränderte Protokoll unterstützenden entfernten Einheit (TA) ein Pseudodatenstrom (DCRC) aus wenigstens einem Signalimpuls erzeugt wird,
- nach Maßgabe des Pseudodatenstroms (DCRC) ein nachfolgender Datenabschnitt auf dessen Gültigkeit überprüft wird, wobei hierzu
- eine dem Datenabschnitt zugeordnete Kenngröße, wie ein CRC- oder Parity-Datum, überprüft wird, die in der entfernten Einheit (TA) unter Berücksichtigung des Pseudodatenstroms (DCRC) berechnet wird,
- die Kenngröße durch die Basisstation (BS) unter Berücksichtigung des in der das veränderte Protokoll unterstützenden Einheit (TA) generierten Pseudodatenstroms (DCRC) erzeugt wird und
- die Überprüfung der Kenngröße den Fehlerzustand bei das veränderte Protokoll nicht unterstützenden Einheiten auslöst.

2. Verfahren nach Anspruch 1, **dadurch gekennzeichnet, dass** das erste Symbol (SYM1) des wenigstens einen Kopfabschnitts modifiziert wird.

3. Verfahren nach Anspruch 2, **dadurch gekennzeichnet, dass** das erste logische Symbol (SYM1) des wenigstens einen Kopfabschnitts in sein logisches Gegensymbol (D1) geändert wird.

4. Verfahren nach Anspruch 2 oder 3, **dadurch gekennzeichnet, dass** das erste Symbol (SYM1) des wenigstens einen Kopfabschnitts zwischengespeichert und mit einem nachfolgenden Kalibrierungssymbol (RTcal) verknüpft wird, um die Modifizierung des ersten Symbols (SYM1) nachzuweisen.

5. Verfahren nach einem der vorhergehenden Ansprüche, **dadurch gekennzeichnet, dass** der Pseudodatenstrom (DCRC) während des wenigstens einen Kopfabschnitts und/oder direkt nach Empfang eines letzten Kopfabschnitts-Symbols erzeugt wird.

6. Verfahren nach einem der vorhergehenden Ansprüche, **dadurch gekennzeichnet, dass** eine Anzahl in dem Datenabschnitt zu übertragender Datenbits überprüft wird.

7. Verfahren nach einem der vorhergehenden Ansprüche, **dadurch gekennzeichnet, dass** bei einer das veränderte Protokoll unterstützenden entfernten Einheit (TA) ein zur Überprüfung der Kenngröße erforderliches Initialdatum bei Modifizierung des wenigstens einen Initialdatum bei Modifizierung des wenigstens einen Kopfabschnitts abweichend von einem Standardwert eingestellt wird.

8. Verfahren nach Anspruch 7, **dadurch gekennzeichnet, dass** das zur Überprüfung der Kenngröße erforderliche Initialdatum von der Basisstation (BS) zu den entfernten Einheiten (TA) übertragen wird.

9. Verfahren nach Anspruch 8, **dadurch gekennzeichnet, dass** das Initialdatum mit dem wenigstens einen Kopfabschnitt übertragen wird.

10. Vorrichtung zur Übertragung von Daten mittels einer elektromagnetischen Welle, auf die Informationspakete aus unterschiedlichen Symbolen aufmodulierbar sind, mit
- einer Basisstation (BS) und
- wenigstens einer entfernten Einheit, wie einem Transponder (TA) oder Remote Sensor, wobei die Informationspakete zumindest einen Kopfabschnitt und einen Datenabschnitt aufweisen, wobei im Kopfabschnitt wenigstens eines Informationspakets die Symbole eindeutig definiert sind und wobei in einem folgenden Datenabschnitt mittels der Symbole Daten codierbar und übertragbar sind, und die Basisstation (BS) zwecks Änderung eines verwendeten Übertragungsprotokolls zum Modifizieren wenigstens eines Kopfabschnitts eingerichtet ist, durch den bei einer das veränderte Protokoll nicht unterstützenden entfernten Einheit (TA) ein Fehlerzustand verbunden mit einem Rückzug aus einer Kommunikation mit der Basisstation (BS) auslösbar ist,
**dadurch gekennzeichnet, dass**
- eine das geänderte Protokoll unterstützende entfernte Einheit (TA) bei Modifizierung des wenigstens einen Kopfabschnitts zum Erzeugen eines Pseudodatenstroms (DCRC) aus wenigstens einem Signalimpuls (I3, I4, I2', I3', I4') ausgebildet ist und
- eine Schaltungseinrichtung (SCH2) in der entfernten Einheit vorgesehen ist, die zum Überprüfen eines nachfolgenden Datenabschnitts auf dessen Gültigkeit nach Maßgabe des Pseudodatenstroms (CCRC, CCRC') ausgebildet ist, wobei die Schaltungseinrichtung (SCH1, SCH2) hierzu eine dem Datenabschnitt zugeordnete Kenngröße, wie ein CRC- oder Parity-Datum, überprüft, die unter Berücksichtigung des Pseudodatenstroms (DCRC) berechnet wird,
- die Kenngröße durch die Basisstation (BS) unter Berücksichtigung des in der das veränderte Protokoll unterstützenden Einheit (TA) generierten Pseudodatenstroms (DCRC) erzeugt wird und
die Überprüfung der Kenngröße den Fehlerzustand bei das veränderte Protokoll nicht unterstützenden Einheiten auslöst.

11. Vorrichtung nach Anspruch 10, **gekennzeichnet durch** eine Zwischenspeichereinrichtung (SP) für ein gegenüber einem ersten Protokoll modifiziertes Symbol (SYM1) des wenigstens einen Kopfabschnitts, eine Verknüpfungseinrichtung (VER) für das zwischengespeicherte Symbol und ein Kalibrierungssymbol (RTcal) sowie **durch** eine Bestimmungseinrichtung (BES), die zum Nachweisen der Modifizierung des zwischengespeicherten Symbols (SYM1) ausgebildet ist.

12. Vorrichtung nach Anspruch 10 oder 11, **dadurch gekennzeichnet, dass** die Schaltungseinrichtung (SCH1, SCH2) zum Überprüfen einer Anzahl in dem Datenabschnitt zu übertragender Datenbits ausgebildet ist.

13. Vorrichtung nach einem der Ansprüche 10 bis 12, **dadurch gekennzeichnet, dass** die Schaitungseinrichtung (SCH1, SCH2) ais CRC- oder Farity-Einheit ausgebildet ist.

## Claims

1. Method of transmitting data between a base station (BS) and at least one remote unit, such as a transponder (TA) or remote sensor, with an electromagnetic wave onto which are modulated information packets of different symbols, wherein
- the information packets have at least a head section and a data section, and the symbols are uniquely defined in the head section of at least one information packet and data are coded and transmitted in a following data section by means of the symbols, and for changing a transmission protocol which is used at least one head section is so modified that an error state is triggered at a remote unit (TA) which does not support the changed protocol and this unit thereupon withdraws a communication with the base station (BS),
**characterised in that**
- on modification of the at least one head section at a remote unit (TA) supporting the changed protocol a pseudo data flow (DCRC) is produced from at least one signal pulse,
- depending on the pseudo data flow (DCRC) a succeeding data section is checked for validity thereof, wherein for this purpose
- a parameter, such as a CRC or parity datum, which is associated with a data section and which is calculated in the remote unit (TA) with consideration of the pseudo data flow (DCRC), is checked,
- the parameter is produced by the base station (BS) with consideration of the pseudo data flow (DCRC) generated in the unit (TA) supporting the changed protocol and
- checking of the parameter triggers the error state in the case of units not supporting the changed protocol.

2. Method according to claim 1, **characterised in that** the first symbol (SYM1) of the at least one head section is modified.

3. Method according to claim 2, **characterised in that** the first logical symbol (SYM1) of at least one head section is changed in its logical counter-symbol (D1).

4. Method according to claim 2 or 3, **characterised in that** the first symbol (SYM1) of the at least one head section is intermediately stored and is linked with a succeeding calibration symbol (RTcal) in order to evidence the modification of the first symbol (SYM1).

5. Method according to one of the preceding claims, **characterised in that** the pseudo data flow (DCRC) is produced during the at least one head section and/or directly after receipt of a last head section symbol.

6. Method according to one of the preceding claims, **characterised in that** a number of data bits to be transmitted in the data section is checked.

7. Method according to one of the preceding claims, **characterised in that** in the case of a remote unit (TA) supporting the changed protocol an initial datum, which is required for checking the parameter, is set, in the case of modification of the at least one initial datum, with modification of the at least one head section, in departure from a standard value.

8. Method according to claim 7, **characterised in that** the initial datum, which is required for checking the parameter, is transmitted from the base section (BS) to the remote units (TA).

9. Method according to claim 8, **characterised in that** the initial datum is transmitted together with the at least one head section.

10. Device for transmitting data by means of an electromagnetic wave onto which information packets of different symbols are modulated, comprising
- a base station (BS) and
- at least one remote unit, such as a transponder (TA) or remote sensor, wherein the information packets comprise at least one head section and at least one data section, wherein the symbols are uniquely defined in the head section of at least one information packet and wherein data can be coded and transmitted in a following data section by means of the symbols, and the base station (BS) is equipped for the purpose of changing a transmission protocol, which is used, for modifying at least one head section, by which in the case of a remote unit (TA), which does not support the changed protocol, an error state connected with withdrawal of communication with the base station (BS) can be triggered,
**characterised in that**
- a remote unit (TA) supporting the changed protocol is formed from at least one signal pulse (13, 14, 12', 13', 14') in the case of modification of the at least one head section for producing a pseudo data flow (DCRC),
- a circuit device (SCH2) constructed for checking a succeeding data section with respect to the validity thereof depending on the pseudo data flow (CCRC, CCRC') is provided in the remote unit, wherein the switching device (SCH1, SCH2) for this purpose checks a parameter, such as a CRC data or parity datum, which is associated with the data section and which is calculated with consideration of the pseudo data flow (DCRC), and
- the parameter is produced by the base station (BS) with consideration of the pseudo data flow (DCRC) generated in the unit (TA) supporting the changed protocol and the check of the parameter triggers the fault state in the case of units not supporting the changed protocol.

11. Device according to claim 10, **characterised by** an intermediate storage device (SP) for a symbol (SYM1), which is modified relative to a first protocol, of the at least one head section, a linking device (VER) for the intermediately stored symbol and a calibrating symbol (RTcal) as well as by a determining device (BES) constructed for detecting the modification of the intermediate stored symbol (SYM1).

12. Device according to claim 10 or 11, **characterised in that** the switching device (SCH1, SCH2) is constructed for checking a number of data bits to be transmitted in the data section.

13. Device according to one of claims 10 to 12, **characterised in that** the switching device (SCH1, SCH2) is constructed as a CRC unit or parity unit.

## Revendications

1. Procédé de transmission de données entre une station de base (BS) et au moins une unité distante, telle un transpondeur (TA) ou un capteur distant, par une onde électromagnétique sur laquelle sont modulés des paquets d'informations à partir de symboles différents, procédé dans lequel :
. les paquets d'informations présentent au moins un en-tête et un segment de données, et les symboles sont définis de manière univoque dans l'en-tête d'au moins un paquet d'informations et des données sont codées au moyen des symboles et transmises dans un segment de données suivant, et
. au moins un en-tête est modifié pour changer un protocole de transmission utilisé de telle façon que dans une unité distante (TA) qui ne supporte pas le protocole modifié, un état d'erreur est déclenché et cette unité se retire alors d'une communication avec la station de base (BS),
**caractérisé en ce que** :
. en modifiant l'au moins un en-tête un flux de pseudo-informations (DCRC) est généré à partir d'un moins une impulsion de signal dans une unité distante (TA) supportant le protocole modifié,
. selon la détermination du flux de pseudo-informations (DCRC) on vérifie la validité d'un segment de données suivant, et à cet effet
- on vérifie une grandeur caractéristique associée à un segment de données, telle une donnée CRC ou de parité, qui est calculée dans l'unité distante (TA) en tenant compte du flux de pseudo-informations (DCRC),
- la grandeur caractéristique est générée par la station de base (BS) en tenant compte du flux de pseudo-informations (DCRC) généré dans l'unité (TA) supportant le protocole modifié, et
- la vérification de la grandeur caractéristique déclenche l'état d'erreur dans l'unité ne supportant pas le protocole modifié.

2. Procédé selon la revendication 1, **caractérisé en ce que** l'on modifie le premier symbole (SYM1) de l'au moins un en-tête.

3. Procédé selon la revendication 2, **caractérisé en ce que** l'on change le premier symbole logique (SYM1) de l'au moins un en-tête en son symbole logique contraire (D1).

4. Procédé selon la revendication 2 ou 3, **caractérisé en ce que** le premier symbole (SYM1) est mis en mémoire tampon et lié à un symbole de calibrage (RTcal) suivant, pour déceler la modification du premier symbole (SYM1).

5. Procédé selon l'une quelconque des revendications précédentes, **caractérisé en ce que** le flux de pseudo-informations (DCRC) est généré durant l'au moins un en-tête et/ou directement après réception d'un dernier symbole d'en-tête.

6. Procédé selon l'une quelconque des revendications précédentes, **caractérisé en ce que** l'on vérifie un nombre de bits de données à transmettre dans le segment de données.

7. Procédé selon l'une quelconque des revendications précédentes, **caractérisé en ce que** dans une unité distante (TA) supportant le protocole modifié, on ajuste une donnée initiale nécessaire à la vérification de la grandeur caractéristique en modifiant l'au moins une donnée initiale en modifiant l'au moins un en-tête en dérogation par rapport à une valeur standard.

8. Procédé selon la revendication 7, **caractérisé en ce que** la donnée initiale nécessaire à la vérification de la grandeur caractéristique est transmise de la station de base (BS) à l'unité distante (TA).

9. Procédé selon la revendication 8, **caractérisé en ce que** la donnée initiale est transmise avec l'au moins un en-tête.

10. Dispositif de transmission de données au moyen d'une onde électromagnétique, sur laquelle on peut moduler des paquets d'informations à partir de symboles différents, comprenant :
. une station de base (BS), et
. au moins une unité distante, telle un transpondeur (TA) ou un capteur distant, les paquets d'information présentant au moins un en-tête et un segment d'informations, les symboles étant définis de manière univoque dans l'en-tête d'au moins un paquet d'informations et des données pouvant être codifiées au moyen des symboles dans un segment de données suivant et transmises, la station de base (BS) étant adaptée pour modifier au moins un en-tête en vue de changer un protocole de transmission utilisé, au moyen duquel on peut déclencher un état d'erreur lié à un retrait d'une communication avec la station de base (BS) dans une unité distante (TA) ne supportant pas le protocole modifié,
**caractérisé en ce que** :
. une unité distante (TA) supportant le protocole modifié lors de la modification de l'au moins un en-tête pour générer un flux de pseudo-informations (DCRC) est formée à partir d'une impulsion de signal (13,14,12',13',14'), et **en ce que** :
. un dispositif de commutation (SCH2) est prévu dans l'unité distante, conçu pour vérifier un segment de données suivant quant à sa validité selon la détermination du flux de pseudo-informations (CCRC, CCRC'), le dispositif de commutation (SCH1, SCH2) vérifiant à cet effet une grandeur caractéristique associée au segment de données, telle une donnée CRC ou de parité, calculée en tenant compte du flux de pseudo-informations (DCRC),
. la grandeur caractéristique est générée par la station de base (BS) en tenant compte du flux de pseudo-informations (DCRC) généré dans l'unité (TA) supportant le protocole modifié, et
. la vérification de la grandeur caractéristique déclenche l'état d'erreur dans l'unité ne supportant pas le protocole modifié.

11. Dispositif selon la revendication 10, **caractérisé par** un dispositif de mémoire intermédiaire (SP) pour un symbole modifié (SYM1) par rapport à un premier protocole de l'au moins un en-tête, un dispositif de liaison (VER) pour le symbole mis en mémoire tampon et un symbole de calibrage (RTcal) ainsi que par un dispositif de détermination (BES), conçu pour déceler la modification du symbole (SYM1) mis en mémoire tampon.

12. Dispositif selon la revendication 10 ou 11, **caractérisé en ce que** le dispositif de commutation (SCH1, SCH2) est conçu pour vérifier dans le segment de données un nombre de bits de données à transmettre.

13. Dispositif selon l'une quelconque des revendications 10 à 12, **caractérisé en ce que** le dispositif de commutation (SCH1, SCH2) est conçu comme unité CRC ou de parité.
